(19) Europäisches Patentamt
European Patent Office
Office européen des brevets

(11) Veröffentlichungsnummer: **0 339 452 B1**

(12) # EUROPÄISCHE PATENTSCHRIFT

(45) Veröffentlichungstag der Patentschrift: **15.12.93**

(51) Int. Cl.[5]: **C01B 25/40**, C23C 22/80

(21) Anmeldenummer: **89106997.3**

(22) Anmeldetag: **19.04.89**

Die Akte enthält technische Angaben, die nach dem Eingang der Anmeldung eingereicht wurden und die nicht in dieser Patentschrift enthalten sind.

(54) **Polymere Titanphosphate, Verfahren zu ihrer Herstellung und ihre Verwendung zur Aktivierung von Metalloberflächen vor einer Zinkphosphatierung.**

(30) Priorität: **28.04.88 DE 3814287**

(43) Veröffentlichungstag der Anmeldung:
**02.11.89 Patentblatt 89/44**

(45) Bekanntmachung des Hinweises auf die Patenterteilung:
**15.12.93 Patentblatt 93/50**

(84) Benannte Vertragsstaaten:
**DE**

(56) Entgegenhaltungen:
**EP-A- 0 180 523**
**EP-A- 0 201 841**
**AU-B- 453 193**
**DE-A- 1 942 556**
**US-A- 3 864 139**

(73) Patentinhaber: **Henkel Kommanditgesellschaft auf Aktien**

**D-40191 Düsseldorf(DE)**

(72) Erfinder: **Endres, Helmut, Dr.**
**Benrodestrasse 82**
**D-4000 Düsseldorf 13(DE)**
Erfinder: **Christophliemk, Peter, Dr.**
**Rudolf-Breitscheid-Strasse 61**
**D-4000 Düsseldorf 13(DE)**
Erfinder: **Brands, Karl-Dieter**
**Gänsestrasse 1**
**D-4000 Düsseldorf 13(DE)**
Erfinder: **Roland, Wolf-Achim, Dr.**
**Spreestrasse 60**
**D-5650 Solingen(DE)**
Erfinder: **Riesop, Jörg**
**Aachener Strasse 97**
**D-5162 Niederzier(DE)**

EP 0 339 452 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft polymere Titanphosphate mit erhöhter Wirksamkeit für die Aktivierung von Metalloberflächen aus Eisen oder Stahl, Zink oder verzinktem Stahl sowie Aluminium oder aluminiertem Stahl vor einer Phosphatierung der genannten Oberflächen mit Zinkionen enthaltenden Phosphatierbädern, insbesondere vor einer sogenannten Niedrigzink-Phosphatierung, bei der das Verhältnis von Zink- zu Phosphationen in der Behandlungslösung kleiner als 1 : 12 ist.

Verfahren zur Erzeugung von Phosphatschichten auf Eisen- oder Stahloberflächen mit Hilfe phosphorsaurer Lösungen, die verschiedene mehrwertige Metallkationen sowie beschleunigend wirkende Zusätze (z.B. Oxidationsmittel) enthalten, sind seit langem bewährter Stand der Technik. Solche Verfahren werden insbesondere in der Automobilindustrie eingesetzt, um einen verbesserten Korrosionsschutz der Automobilkarossen zu erzielen. Die phosphatierten Oberflächen werden anschließend lackiert, bevorzugt durch kathodische Elektrotauchlackierung.

Phosphatiert werden die üblichen für den Karosseriebau verwendeten Werkstoffe, herkömmlicherweise Eisen- oder Stahlbleche, in jüngerer Zeit auch zunehmend elektrolytisch verzinkter oder feuerverzinkter Stahl oder Werkstoffe mit einer Oberfläche aus Zinklegierungen, welche als Legierungspartner beispielsweise Eisen, Nickel, Kobalt oder Aluminium enthalten. Ein korrosionsinhibierende Phosphatierung solcher Oberflächen ist nicht nur im Automobilbau, sondern auch bei der Herstellung von Haushaltsgeräten wie Waschmaschinen oder Kühlschränken üblich.

Vor der oben genannten Behandlung werden die Werkstücke gereinigt, gespült und aktiviert, um bei der Phosphatierung eine dünne und gleichmäßige Phosphatschicht zu erzielen, die bekannterweise eine Voraussetzung für einen guten Korrosionsschutz bildet. In den lange Zeit üblichen "Hochzink-Phosphatierverfahren" war es möglich, die Metalloberfläche in einem Verfahrensschritt von anhaftenden Ölen, Fetten sowie anderen, auch aus der mechanischen Bearbeitung herrührenden Verunreinigungen zu befreien und gleichzeitig für den folgenden Schritt der Zinkphosphatierung zu aktivieren. Entsprechende Behandlungsbäder sind beispielsweise im Rahmen von Verfahren zur Vorbehandlung von Metalloberflächen vor dem Phosphatieren in der DE-C-2 951 600 und der DE-C-3 213 649 beschrieben.

In jüngster Zeit werden jedoch zunehmend sogenannte "Niedrigzink-Phosphatierverfahren" eingesetzt, wie sie beispielsweise in der DE-C-2 232 067 angegeben sind. Diese führen in Verbindung mit der üblicherweise nachfolgenden Elektrotauchlackierung zu einem deutlich verbesserten Korrosionsschutz. Allerdings reagieren diese Verfahren viel empfindlicher auf Änderungen der Verfahrensparameter und auf Verunreinigungen, die mit den zu beschichtenden Blechen in das Phosphatierbad eingetragen werden. Damit kommt dem Schritt der Aktivierung der Metalloberfläche eine viel größere Bedeutung als bislang zu. Besonders hat es sich als vorteilhaft erwiesen, die Aktivierung in einem getrennten Verfahrensschritt dem Reinigungs und Entfettungsschritt nachzuschalten. Dies trifft insbesondere dann zu, wenn die Phosphatierung nach dem Niedrigzink-Verfahren in einem Tauchvorgang erfolgt, ist aber auch gleichermaßen für die Zinkphosphatierung nach einem Spritz- oder kombinierten Spritztauchverfahren sowie Tauchspritzverfahren bedeutsam.

Die Aktivierung der Metalloberfläche hat folgende Ziele:

Erhöhung der Keimbildungsgeschwindigkeit und damit der Zahl der Kristallkeime in der Startphase der Zinkphosphatierung, was zu einer Schichtverfeinerung führt; durch die Bildung möglichst dicht nebeneinanderliegender Kristalle wird die Porosität der angestrebten Zinkphosphatschicht verringert. Hieraus resultiert eine gleichmäßige und geschlossene Zinkphosphatschicht über die gesamte Metalloberfläche bei geringem Flächengewicht (angegeben in Gramm Metallphosphat pro $m^2$ Metalloberfläche), wobei sich als Haftgrund für Lacke geringe Flächengewichte als günstig erwiesen haben.

Reduzierung der Mindestphosphatierzeit, d.h. der Zeit bis zur vollständigen Bedeckung der Metalloberfläche mit einer geschlossenen Zinkphosphatierschicht.

Diese Wirkungen des Aktivierungsmittels führen letztlich dazu, daß über die feinteiligen und dichten, gut auf dem Metallgrund haftenden Zinkphosphatschichten eine gute Verankerung der aufzubringenden Lackschichten und somit guter Korrosionsschutz als Hauptziel der Zinkphosphatierung erreicht werden.

In der Praxis haben sich als wirksame Aktiviermittel mit den geforderten Eigenschaften ausschließlich polymeres Titan(IV)-phosphat enthaltende Produkte bewährt, wie sie bereits von Jernstedt, beispielsweise in US-A-2 456 947 und US-A-2 310 239, beschrieben wurden. Diese Aktivierungsmittel werden heutzutage bevorzugt in einem gesonderten Spülbad direkt vor der Zinkphosphatierung eingesetzt, können aber auch vorab einem - allenfalls mild alkalischen - Reinigerbad zugegeben werden.

Titan(IV)phosphate bilden sich zwar generell bei der Umsetzung von wäßrigen Ti(IV)-Salzlösungen mit löslichen Phosphaten oder Phosphorsäure. Produkte mit aktivierenden Eigenschaften werden jedoch nur unter besonderen Herstellungsbedingungen erhalten, die unter anderem in den oben angeführten Schriften

von Jernstedt genauer beschrieben sind. Wesentliche Herstellungsparameter dabei sind:

Umsetzung geeigneter Titankomponenten mit Phosphatkomponenten, insbeonsdere Alkalimetallphosphate, bei hohem Phosphatüberschuß unter Wasserzusatz bei einer Temperatur oberhalb 70 °C,

Verwendung von Titanylsulfat, Kaliumhexafluorotitanat, Titantetrachlorid, Titandioxid, Kaliumtitanoxidoxalat oder Titandisulfat als Titankomponenten,

Verwendung von Mono-, Di- oder Trinatriumdiphosphat, Pentanatriumtriphosphat oder Tetranatriumdiphosphat oder deren Gemische als Phosphatkomponenten,

erforderlichenfalls Einstellung des pH-Wertes (7 bis 8) mit Natriumcarbonat, Natriumhydroxid oder Schwefelsäure.

Um den hohen Anforderungen der Anwender, insbesondere aus der Automobilindustrie, gerecht zu werden, dürfen als Aktivierungsmittel nur solche Titanphosphate zur Anwendung kommen, die mit gleichbleibender Qualität hergestellt werden können und somit eine zuverlässige Aktivierleistung bei hoher Badkapazität (ausgedrückt als aktivierbare Fläche pro Volumeneinheit des gebrauchsfertigen Aktivierbades) aufweisen.

In der US-A-2 310 239 ist beschrieben, daß selbst bei Einhaltung konstanter Reaktionsbedingungen die Qualität, d.h. die erwünschte aktivierende anwendungstechnische Wirkung der Titanphosphate, von Charge zu Charge starken Schwankungen unterworfen sei. Eine vielzahl nachfolgender Patentschriften bietet Lösungsansätze an. Beispielhaft seien angeführt: DE-C-1 144 565 (Änderung der Reihenfolge der Rohstoffzugabe und Regulierung des pH-Wertes vor der Umsetzung) und DE-C-2 931 799 (als Titankomponente wird mit geschmolzenem Natriumhydroxid aufgeschlossenes Titandioxid eingesetzt).

Die dem Stand der Technik entsprechenden Herstellungsverfahren für aktivierende Titanphosphate führen zu Produkten schwankender Qualität, die insbesondere nur kurze Standzeiten der Aktivierbäder ermöglichen. Eine Verbesserung wird in der EP-A-0 180 523 dadurch angestrebt, daß durch Zusatz von Phosphonsäuren beim Ansetzen des Aktivierbades auf das überlicherweise erforderliche vollensalzte Wasser verzichtet und auf billigeres Leitungswasser zurückgegriffen werden kann. Dabei soll die Konzentration der Phosphonsäure im gebrauchsfertigen Aktivierbad mindestens 10 ppm, vorzugsweise mindestens 50 ppm, betragen.

Die Aufgabe der vorliegenden Erfindung besteht darin, polymere Titanphosphate zur Verfügung zu stellen, die eine möglichst geringe Korngröße aufweisen, d.h. eine möglichst geringe Teilchengrößenverteilung besitzen. Eine weitere Aufgabe der vorliegenden Erfindung besteht darin, derartige polymere Titan(IV)-Phosphate zur Verfügung zu stellen, die eine erhöhte Wirksamkeit für die Aktivierung von Metalloberflächen vor einer Phosphatierung mit Zinkionen enthaltenden Phosphatierbädern aufweisen.

Die vorgenannten Aufgaben werden gelöst durch pulverförmige polymere Titan(IV)-phosphate, die erhältlich sind

durch Umsetzung von Titan(IV)-verbindungen mit Alkalimetallphosphaten sowie einem Titan(IV)-Komplexbildner in unterstöchiometrischer Menge, bezogen auf den Titan(IV)-Gehalt, in wäßriger Zubereitung bei Temperaturen im Bereich von 75 bis 120 °C und anschließendem Trocknen,

wobei eine 0,2 Gew.-%ige wäßrige Dispersion der so erhaltenen Produkte bei Filtration durch ein Membranfilter der Porenweite 200 nm ein Filtrat ergibt, daß mehr als 95 Gew.-% der eingesetzten Titanmenge enthält.

Erfindungsgemäß zu verwendende Titan(IV)-Verbindungen sind insbesondere in der US-A-2 310 239 beschrieben.

Die mit den Titan(IV)-Verbindungen unter den Bedingungen einer hydrothermalen Umsetzung bei einem pH-Wert im Bereich von 6 bis 12 umzusetzenden Alkalimetallphosphate werden in der DE-A-37 31 049 genannt und entsprechen den allgemeinen Formeln (I) bis (III),

$M_mH_{3-m}PO_4$ (I)

$M_pH_{n+2-p}P_nO_{3n+1}$ (II ) und

$(M_qH_{1-q}PO_3)_r$ (III)

in denen

M für ein Alkalimetall steht und
m 0, 1, 2 oder 3,
n 2, 3 oder 4,
p 0, 1, 2 ..., n+2 und
q 0 oder 1 und

r eine ganze Zahl von 2 bis 20 bedeuten.

Überraschenderweise wurde gefunden, daß die Zugabe spezieller Komplexbildner in geringer Menge während der zu polymerem Titanphosphat führenden Reaktion - wobei das Stoffemengenverhältnis Komplexbildner zu Titan unter 1,0 liegen soll - zu aktivierenden Produkten mit deutlich verbesserten anwendungstechnischen Eigenschaften führt. Dabei kann es besonders vorteilhaft sein, nur eine Teilmenge des Komplexbildners vor dem Beginn der Umsetzung (n der Praxis zusammen mit der Titan-Ausgangsverbindung) zum Reaktionsgemisch zu geben, den Rest nach einem ersten Antrocken des Reaktionsproduktes zuzugeben und fertig zu trocken.

Die Umsetzung kann vor allem bei hohem Festoffgehalt im Reaktionsgemisch vorteilhaft in einem Kneter geschehen. Dabei ist eine Reaktionstemperatur von 80 °C ausreichend, kann aber auch ohne Produktschädigung überschritten werden. Insbesondere bei weniger hoch konzentrierten Reaktionsgemischen kann die Herstellung vorteilhaft in einem Rührkessel bei Siedetemperatur unter Normaldruck mit nachfolgender Sprühtrocknung erfolgen. Die gesteigerte Wirksamkeit der erfindungsgemäß hergestellten Aktiviermittel zeigt sich besonders in einer im Vergleich zu Standardprodukten deutlich gesteigerten Badkapazität, die eine verlängerte Standzeit der Aktivierbäder erlaubt.

Die aktivierenden Titanphosphate kommen zwar als wäßrige Lösung oder Dispersion zur Anwendung, werden jedoch aus Gründen der Wirtschaftlichkeit bevorzugt in Pulverform in Verkehr gebracht.

Ein weiterer Gegenstand der vorliegenden Erfindung, betrifft das Verfahren zur Herstellung von derartigen pulverförmigen polymeren Titan(IV)-Phosphaten, das dadurch gekennzeichnet ist, daß man eine Titan(IV)-verbindung mit einem Alkalimetallphosphat in wäßriger Zubereitung bei Temperaturen im Bereich von 75 bis 120 °C umsetzt, wobei man vor oder während der Umsetzung einen Titan(IV)-Komplexbildner in unterstöchiometrischer Menge, bezogen auf den Titan(IV)-Gehalt, zugibt und anschließend das Reaktionsprodukt trocknet.

Gemäß einer bevorzugten Ausführungsform der vorliegenden Erfindung ist das Verfahren dadurch gekennzeichnet, daß man als Titan(IV)-Verbindung Dikaliumhexafluorotitanat und als Alkalimetallphosphat Dinatriumhydrogenphosphat einsetzt, wobei das Atomverhältnis von Titan zu Phosphor 1 : 20 bis 1 : 60 und vorzugsweise 1 : 25 bis 1 : 40 beträgt. Die Atomverhältnisse von Titan zu Phosphor können in gleichem Maße auch für andere, weniger bevorzugte Umsetzungen eingesetzt werden.

Eine weitere bevorzugte Ausführungsform der vorliegenden Erfindung ist dadurch gekennzeichnet, daß man als Komplexbildner

(a) Poly(aldehydocarbonsäuren) oder deren Alkalimetallsalze, erhältlich durch die Umsetzung von Wasserstoffperoxid, Acrolein und Acrylsäure mit

- einer Viskositätszahl im Bereich von 5 bis 50 ml/g,
- einer Säurezahl im Bereich von 450 bis 670,
- einem Säureäquivalentgewicht im Bereich von 125 bis 70,
- einem Stockpunkt von weniger als 0 °C und
- einem Gehalt an Carboxylgruppen im Bereich von 55 bis 90 Mol-% und
- einem Molekulargewicht im Bereich von 1 000 bis 20 000

und/oder

(b) 1,1-Diphosphonsäuren der allgemeinen Formel (IV)

$$\begin{array}{c} PO_3(M_1)_2 \\ | \\ X-C-R \\ | \\ PO_3(M_2)_2 \end{array} \qquad (IV)$$

wobei

| | |
|---|---|
| R | für einen unsubstituierten oder einen in Parastellung mit Halogen-, Amino-, Hydroxy- oder $C_{1-4}$-Alkylgruppen, vorzugsweise mit C1 oder $NH_2$, substituierten Phenylrest, einen geradkettigen oder verzweigtkettigen oder cyclischen, gesättigten oder einfach oder mehrfach ungesättigten Alkylrest mit 1 bis 10 C-Atomen, |
| X | für Wasserstoff, Hydroxy, Halogen oder Amino und |
| $M_1$ und $M_2$ | jeweils unabhängig voneinander für Wasserstoff und/oder das Äquivalent eines Alkalimetallions stehen, |

einsetzt.

Insbesondere bevorzugt werden als Komplexbildner in den Verfahren der vorliegenden Erfindung 1,1-Diphosphonsäuren der allgemeinen Formel (IV), wobei R für einen unverzweigten Alkylrest mit 1 bis 6 C-Atomen steht, eingesetzt.

Vorzugsweise werden in den Poly(aldehydocarbonsäuren) und den 1,1-Diphosphonsäuren als Alkalimetallsalze jeweils die Natriumsalze eingesetzt, so daß in der allgemeinen Formal (IV) M für natrium steht.

Während allgemein eine unterstöchiometrische Menge von Komplexbildner, bezogen auf die Menge an Titan, eingesetzt wird, besteht eine bevorzugte Ausführungsform der vorliegenden Erfindung darin, daß man den Komplexbildner in einer Menge von 0,05 bis 0,7 Mol pro Mol Titan einsetzt.

Gemäß einer bevorzugten Ausführungsform wird der Komplexbildner in einer Menge von 0,1 bis 0,6 Mol pro Mol Titan eingesetzt.

Eine weitere bevorzugte Ausführungsform des erfindungsgemäßen Verfahrens besteht darin, daß man bis zu 30 Gew.-% der Gesamtmenge an Komplexbildner vor oder während der Umsetzung der Titan(IV)-Verbindung mit Alkalimetallphosphat zugibt und die restliche Menge nach einem ersten Antrocken auf eine Restfeuchte von 10 bis 20 % in die Reaktionsmischung einarbeitet. Die Umsetzung von Titan(IV)-Verbindung mit Alkalimetallphosphat kann üblicherweise in einem Kneter bis zu Trockne oder in einem Rührkessel bei anschließender Sprühtrocknung durchgeführt werden. Demgemäß besteht eine weitere bevorzugte Ausführungsform der vorliegenden Erfindung darin, daß man die Umsetzung von Titan(IV)-Verbindungen mit Alkalimetallphosphat bei Temperaturen im Bereich von 75 °C bis 120 °C in einem Kneter bis zur Trockne oder in einem Rührkessel bei anschließender Sprühtrocknung durchführt.

Inbesondere bevorzugt ist das Verfahren, wenn man die Umsetzung bei Temperaturen im Bereich von 80 °C bis 100 °C durchführt.

Das erfindungsgemäße Verfahren erlaubt eine große Variation des Feststoffgehaltes bei der Umsetzung. Demgemäß besteht eine weitere bevorzugte Ausführungsform des erfindungsgemäßen Verfahrens darin, daß der Feststoffgehalt bei der Umsetzung im Bereich von 30 bis 85 % liegt. Eine insbeonsdere bevorzugte Ausführungsform der vorliegenden Erfindung besteht darin, daß der Feststoffgehalt der Umsetzung in einem Kneter im Bereich von 75 bis 85 % liegt. Bei der Umsetzung in einem Rührkessel wird insbesondere bevorzugt, daß der Feststoffgehalt im Bereich von 30 bis 40 % liegt.

Die polymeren Titan(IV)-Phosphate der vorliegenden Erfindung weisen einen Teilchendurchmesser von weniger als 200 nm auf. Dementsprechend sind diese Titan(IV)-Phosphate ausgezeichnet geeignet zur Herstellung von Aktivierungsmitteln auf der Basis dieser polymeren Titanphosphate für die Aktivierung von Metalloberflächen aus Eisen, Stahl, Zink, verzinktem Eisen oder Stahl, Aluminium oder aluminiertem Stahl vor der Phosphatierung mit Zinkionen enthaltenden Phosphatierbädern, insbesondere vor einer sogenannten Niedrigzinkphosphatierung.

Derartige Aktivierungsmittel werden üblicherweise durch Einstellen von Feststoffgehalten im Bereich von 0,001 bis 10 Gew.-% der erfindungsgemäßen aktivierenden Titanphosphate mit Wasser unmittelbar zur Aktivierung von Metalloberflächen vor einer Zinkphosphatierung eingesetzt.

Demgemäß besteht ein weiterer Gegenstand der vorliegenden Erdindung in der Verwendung der erfindungsgemäßen polymeren Titan(IV)-Phosphate mit einem Teilchendurchmesser von weniger als 200 nm in Form von wäßrigen Dispersionen als Aktivierungsmittel von Metalloberflächen aus Eisen, Stahl, Zink, verzinktem Eisen oder verzinktem Stahl, Aluminium und/oder aluminiertem Stahl vor der Phosphatierung mit Zinkionen enthaltenden Phosphatierbädern.

Eine weitere bevorzugte Ausführungsform der vorliegenden Erfindung besteht in der Verwendung von polymeren Titan(IV)-Phosphaten gemäß der vorliegenden Erfindung in Form von wäßrigen Dispersionen als Aktivierungsmittel vor der Niedrigzinkphosphatierung.

Die erfindungsgemäß eingesetzten Poly(aldehydocarbonsäuren) sind im Handel erhältlich und werden von der Forma Degussa AG, Frankfurt, beispielsweise unter den Bezeichnungen POC OS 20, POC HS 0010, POC HS 2020, POC HS 5060, POC HS 65120 sowie POC AS 0010, POC AS 2020, POC AS 5060 oder POC AS 65120 vertrieben. Hierbei betrifft die Kennzeichnung HS die Säureform und die Kennzeichnung AS die Natriumsalz-Form der Poly(aldehydocarbonsäuren). Sie können nach einem speziellen, bei der Firma Degussa entwickelten Verfahren, der "oxidativen Polymerisation" von Acrolein hergestellt werden. Dabei wird Acrolein allein oder im Gemisch mit Acrylsäure in wäßriger Lösung mit Wasserstoffperoxid behandelt. Das $H_2O_2$ wirkt hierbei als Initiator der Polymerisation und als Molekulargewichtsregler. Gleichzeitig wird durch Wasserstoffperoxid ein Teil der Aldehydgruppen des Acroleins zu Carboxylgruppen oxidiert. So entstehen Polymere mit seitenständigen Aldehyd- und Carboxylgruppen, nämlich die Poly(aldehydocarbonsäuren).

Angaben über die vorstehend beschriebene Herstellung der Poly(aldehydocarbonsäuren) sowie über deren Verwendungsmöglichkeiten finden sich in der Firmenschrift der Degussa AG mit dem Titel "POC-Umweltfreundliche Polycarbonsäuren mit vielfältigen Anwendungsmöglichkeiten" (Druckvermerk: CH 215-3-3-582 Vol). Hiernach lassen sich die Poly(aldehydocarbonsäuren) beispielsweise als Härtestabilisatoren bezüglich der Inhibierung der Kristallisation von Calcium- und anderen Erdalkalimetallsalzen, als Belagverhinderer bei der Meerwasserentsalzung, als Dispergiermittel für feststoffreiche wäßrige Pigmentdispersionen sowie als Gerüststoff (Builder) für Wasch- und Reinigungsmittel verwenden. In dieser Firmenschrift finden sich ferner Angaben über diesbezüglich relevante Patentliteratur, beispielsweise DE-C-10 71 339 (Herstellung), DE-A-19 04 940 (Komplexbildner), DE-A-19 04 941 (Polyoxycarbonsäuren), DE-C-19 42 556 (Komplexbildner), DE-A-21 54 737 (Rostschutzbehandlung), DE-A-23 30 260 sowie DE-C-23 57 036 (Herstellung).

Die freien Poly(aldehydocarbonsäuren) können mit Laugen zu den entsprechenden Salzen neutralisiert werden, z.B. mit NaOH zu Natrium-poly(aldehydocarboxylaten).

Durch Wahl der Reaktionsbedingungen können Carboxyl- und Carbonylgehalt sowie das mittlere Molekulargewicht der verschiedenen Poly(aldehydocarbonsäure)-Qualitäten variiert werden. Die allgemeine Formel (V) gibt den grundlegenden Aufbau der erfindungsgemäß zu verwendenden Poly(aldehydocarbonsäuren) wieder.

$$HO[(CH_2-\underset{COOH}{CH}-)_x\ (CH_2-\underset{CHO}{CH})_y]_p-OH \qquad (V)$$

Die Poly(aldehydocarbonsäuren) sind überwiegend linear über Kohlenstoff-Kohlenstoffbindungen verknüpfte Poly)aldehydocarbonsäuren) mit vielen Carboxyl- und wenigen Carbonyl-Seitengruppen sowie Hydroxyl-Endgruppen. Ihre chemische Konstitution wird insbesondere durch die allgemeine Formel (V) charakterisiert.

Die mittleren Polymerisationsgrade werden durch die Viskositätzahlen gekennzeichnet. Diese liegen üblicherweise zwischen 5 bis 50 ml/g, bezogen auf 100 %igen Feststoff, gemessen als 2 %ige Lösung in 0,1 N NaBr bei 25 °C und pH 10 in einen Ubbelohde Viskosimeter, Kapillare Oa. Die räumliche Verknüpfung der Monomerbausteine kann als ataktisch, die Reihenfolge der Verknüpfung als statistisch angenommen werden.

Der Gehalt an Carboxylgruppen, ausgedrückt in Mol-% COOH, kann aus der Säurezahl (DIN 53402) der getrockneten Polymeren berechnet, werden. Die Säurezahl wäßriger Poly(aldehydocarbonsäuren) ist zur Berechnung der Molprozente COOH ungeeignet, da die technischen Qualitäten geringe Mengen Ameisensäure, Essigsäure und $\beta$-Hydroxypropionsäure als Nebenprodukte enthalten.

Die Natrium-poly(aldehydocarboxylate) müssen vor der Säurezahlbestimmung durch Ionenaustausch in die H-Form überführt werden.

Die erfindungsgemäßen Titan(IV)-Phosphate zeichnen sich gegenüber den herkömmlichen Aktivierungsmitteln - auch den gemäß oben erwähnter EP-A-180 523 mittels nachträglichem Aufmischen mit Phosphonsäuren in hoher Konzentration hergestellten Produkten - dadurch aus, daß durch die Zugabe kleiner Mengen spezieller Komplexbildner vor bzw. während der Umsetzung ein Produkt entsteht, das in Anwendungskonzentrationen von 0,2 Gew.-% bei Filtration durch ein Membranfilter der Porenweite 200 nm rasch filtrierbar ist und im Filtrat mehr als 95 Gew.% der eingesetzten Titanmenge enthält.

Werden beispielsweise zu eine wäßrigen Reaktionsmischung aus Dikaliumhexafluorotitanat und Dinatriumhydrogenphosphat (Molverhältnis 1 : 33) vor dem Kneten bei 80 °C 0,12 Mol 1-Hydroxyethan-1,1-diphosphonsäure (= HEDP) pro Mol Ti zugegeben, erhält man nach dem Trocknen ein Aktivierungsmittel, das bei einer Anwendungskonzentration von 0,2 Gew.-% eine fast klare wäßrige (kolloide) Lösung liefert, während ohne diesen Komplexbildnerzusatz hergestellte Produkte eine milchig-trübe Suspension ergeben.

Unterwirft man die 0,2 %ige wäßrige Zubereitung eines erfindungsgemäßen Produktes und eines Vergleichsproduktes einer Druckfiltration durch ein Membranfilter (Filterdurchmesser 100 mm, Porenweite 200 nm), so lassen sich zwei Liter der erstgenannten Zubereitung in wenigen Minuten filtrieren. Die auf dem Filter verbleibende Titanmenge beträgt etwa 1 % der eingesetzten Menge. Die Suspension des Vergleichsproduktes benötigt für die Filtration mehrere Stunden. Hier verbleiben auf dem Filter etwa 80 % des vorliegenden Titans; nachträgliche Zugabe von Phosphonsäure zur Anwendungssuspension, wie in der EP-A-180 523 beschrieben, ändert hieran nichts.

Die vorstehenden Ergebnisse unterstreichen den überraschenden Befund, daß bei der erfindungsgemäßen unterstöchiometrischen Zugabe des Komplexbildners vor bzw. während der Umsetzungsreaktion zum Aktiviermittel durch Beteiligung des Komplexbildners am Reaktionsverlauf ein qualitativ anderes Produkt entsteht als bei den gemäß dem Stand der Technik hergestellten polymeren Titan(IV)-Phosphaten, wobei das erfindungsgemäße Produkt dadurch gekennzeichnet ist, daß eine Anwendungssuspension durch ein

Membranfilter der Porenweite 200 nm praktisch rückstandsfrei filtrierbar ist.

Wie die nachstehenden Beispiele näher erläutern, leigt der anwendungstechnische Vorteil der polymeren Titan (IV)-Phosphate - neben dem Effekt, fast wasserklare Aktivierbäder zu ergeben - in einer wesentlich gesteigerten Badstandzeit, d.h. Badkapazität (ausgedrückt in aktivierter Fläche pro Volumeneinheit des Aktivierbades) und damit in eienr wirtschaftlicheren und sichereren Anwendung.

Beispiele

Für die Beispiele 1 bis 9 und für die Vergleichsbeispiele 1 und 2 wurde ein Normalzink-Phosphatierverfahren gemäß Tabelle 1 angewandt, das den Einfluß des Aktiviermittels auf Flächengewicht und Morphologie der Zinkphosphatschicht deutlich macht und es erlaubt, die Ergiebigkeiten (Badkapazitäten) der gebrauchsfertigen Aktivierlösungen zu vergleichen. Um die Übertragbarkeit der Ergebnisse auf andere Phosphatiertechniken zu bestätigen, wurden die Beispiele 10 bis 12 mit einem Niedrigzink-Phosphatierverfahren mit Spritzapplikation gemäß Tabelle 3 durchgeführt.

Um die aktivierende Wirkung der erfindungsgemäß hergestellten polymeren Titan(IV)-Phosphate und zum Vergleich herangezogener Produkte zu bestimmen, wurden die Oberflächen von Stahlcoupons (Werkstoff St 1405 m, Abmessungen 10 cm x 20 cm, ca. 1 mm Dicke) mittels eines standardisierten Tauchphosphatierverfahrens gemäß Tabelle 1 phosphatiert. Das Verfahren wurde so ausgewählt, daß der Einfluß der polymeren Titan(IV)-Phosphate als Aktiviermittel auf Flächengewichte und Morphologie der Zinkphosphatschicht sowie die Kapazität der aktivierenden wäßrigen Zubereitungen unter Standardbedingungen deutlich wird. Die in den Beispielen dargelegten Befunde lassen sich erfahrungsgemäß in ihrer Tendenz verallgemeinern und sind somit auch für andere Zinkphosphatierverfahren gültig. Dies wird durch die Beispiele 10 bis 12 (Tabelle 4) gezeigt, für die ein Niedrigzink-Phosphatierverfahren mit Spritzapplikation gemäß Tabelle 3 angewandt wurde. Wie im Vergleichsbeispiel 2 gezeigt wird, ist die Badkapazität eines Vergleichsproduktes, bei dem in die Anwendungssuspension nachträglich HEDP zugegeben wurde, deutlich geringer als diejenige der erfindungsgemäßen Produkte.

Unter "Flächengewicht" wird die flächenbezogene Masse der Metallphosphatschicht in Gramm pro Quadratmeter verstanden, die gemäß DIN 50 492 ermittelt wird. Zur Bestimmung der Badkapazität wurden jeweils zwei Liter einer 0,2 gew.-%igen wäßrigen Zubereitung des Aktiviermittels mit Prüfblechen belastet, die anschließend phosphatiert wurden. Anfänglich und dann nach jedem zehnten Probeblech wurde das mittlere Flächengewicht von vier aufeinanderfolgenden Probeblechen bestimmt. Die hieraus berechneten Durchschnittswerte sind in Tabelle 2 angegeben. Die Bäder galten als erschöpft, wenn zehn Bleche hintereinander bei der Zinkphosphatierung Fehlstellen oder grobkristallin Bereiche aufwiesen. Die Badkapazität wird in $m^2$ aktivierbare Fläche pro 2 l Aktivierbad angegeben.

Beispiele 1 bis 7

Zur Herstellung der Aktiviermittel wurden die Ausgangsverbindungen in den in Tabelle 2 angegebenen Mengenverhältnissen ungesetzt. Typischerweise wurde dabei so verfahren, wie hier für Beispiel 3 näher beschrieben wird. Die 1-Hydroxyethan-1,1-diphosphonsäure (HEDP) wurde dabei als 60 gew.-%ige wäßrige Lösung (Turpinal[R] SL/Henkel KGaA, Düsseldorf) eingesetzt, die folgenden Mengenangaben beziehen sich auf Wirksubstanz:

In einem Laborkneter mit Sigma-Schaufeln wurden 171,4 g vollentsalztes (VE)- Wasser bei 80 °C vorgelegt und mit 366 g (= 2/3 der Gesamtmenge) $Na_2HPO_4$ vermischt. Danach wurden 28.6 g $K_2TiF_6$ und 2,9 g HEDP zugegeben und 15 Minuten verknetet.

Anschließende wurde die Restmenge (183,3 g) $Na_2HPO_4$ zugefügt und das Produkt bis zum Antrocknen verknetet. Nun wurden weitere 11,5 g HEDP zugefügt und die Reaktionsmischung bis zur Trockne geknetet.

Die Beispiele 1 bis 3 unterscheiden sich in der zugesetzten Menge an 1-Hydroxyethan-1,1-diphosphonsäure (HEDP). In den Beispielen 4 bis 7 wurden andere 1,1-Diphosphonsäuren als Komplexbildner eingesetzt.

Die Ergebnisse sind in der nachstehenden Tabelle 2 zusammengefaßt

Beispiel 8

Eine wäßrige Suspension aus 30,93 % $Na_2HPO_4$, 1,59 % $K_2TiF_6$ und 0,4 % HEDP (Rest zu 100 % = Wasser) wurde bei 100 °C im Rührkolben eine Stunde lang gerührt, danach wurden weitere 0,41 % HEDP zugesetzt und das Reaktionsprodukt sprühgetrocknet. Das so erhaltene erfindungsgemäße Aktiviermittel hatte eine Badkapazität von 4,12 $m^2$ bei einem mittleren Flächengewicht von 2,1 $g/m^2$. Ergebnisse: siehe

Tabelle 2.

## Beispiel 9

Es wurde ein Aktiviermittel, wie vorstehend für Beispiel 3 beschrieben, hergestellt, wobei als Komplexbildner anstelle der HEDP eine handelsübliche Poly(aldehydocarbonsäure) in Form des Natriumsalzes - POC OS 20 der Forma Degussa AG, Frankfurt - Verwendung fand. Die eingesetzten Mengen der Reaktanten waren (in der in Beispiel 3 angegebenen Reihenfolge):
171,4 g VE-Wasser; 370,5 g $Na_2HPO_4$; 28,6 g $K_2TiF_6$; 2,0 g POC OS 20; 183,3 g $Na_2HPO_4$; 7,9 g POC OS 20.
Ergebnisse: siehe Tabelle 2.

## Vergleichsbeispiel 1

Es wurde ein Aktiviermittel, wie vorstehend für Beispiel 3 beschrieben, hergestellt, wobei jedoch kein Komplexbildner zugesetzt wurde.
Die eingesetzten Mengen der Reaktanten sowie die Ergebnisse sind gleichfalls in Tabelle 2 zusammengefaßt.

## Vergleichbeispiel 2

Zu einer Anwendungssuspension des Vergleichsproduktes aus Vergleichbeispiel 1 wurden 0,5 % (bezogen auf eingesetztes Aktiviermittel) HEDP nachträglich, d.h. ohne Umsetzung zugegeben: Die Badkapazität betrug 2,4 $m^2$ für 2 l Aktivierbad und liegt damit etwas höher als für das Produkt aus Vergleichbeispiel 1, aber deutlich niedriger als für das -weniger Komplexbildner enthaltende - erfindungsgemäße Produkt aus Beispiel 1.

Die Ergebnisse der anwendungstechnischen Prüfungen der Beispiele 1 bis 9 und Vergleichsbeispiele 1 und 2 sind in Tabelle 2 aufgeführt. Wie Vergleichsbeispiel 1 zeigt, liefert ein komplexbildnerfreies Aktiviermittel zwar akzeptable Flächengewicht, weist jedoch nur eine geringe Badkapazität auf. Bei den erfindungsgemäßen Produkten aus Beispielen 1 bis 9 ist die Badkapazität bei teilweise verbesserten (d.h. niedrigeren) Flächengewichten auf über 400 % gesteigert. Beispiel 1 belegt gegenüber Vergleichbeispiel 1 den Vorteil einer geringen Zugabe Komplexbildner (0,12 Mol pro Mol Ti) vor Beginn der Umsetzung, Beispiele 2 und 3 zeigen den positiven Effekt einer weiteren Zugabe des Komplexbildners nach einer Zwischentrocknung des Produktes (auf 10 bis 20 % Restfeuchte).

## Beispiele 10 bis 12

Phosphatierung im Niedrigzink-Phosphatierverfahren mit Spritzapplikation gemäß Tabelle 3; Ergebnisse siehe Tabelle 4.

Tabelle 1

Behandlungsschritte im Rahmen des Standardphosphatierverfahrens

| Stufe | Behandlungsschritt | Behandlung mit | Konzentration (Gew.-%) | Temperatur (°C) | Behandlungszeit (min) |
|---|---|---|---|---|---|
| 1 | mechanisches Reinigen und Entfetten | saugfähigem Papier | - | 20 | 5 |
| 2 | chemisches Reinigen und Entfetten | Ridoline$^R$ C 1051 1) | 5 | 80-90 | 5 |
| 3 | Spülen | Leitungswasser 2) | - | 20 | 1 |
| 4 | Beizen | Chemapix$^R$ ACM 3) | 30 | 20 | 1 |
| 5 | Spülen | Leitungswasser 2) | - | 20 | 1 |

Fortsetzung

Fortsetzung Tabelle 1

| Stufe | Behandlungsschritt | Behandlung mit | Konzentration (Gew.-%) | Temperatur (°C) | Behandlungszeit (min) |
|---|---|---|---|---|---|
| 6 | Aktivieren | Aktivierungsmittel gemäß Tabelle 2 | 0,2 | 20 | 2 |
| 7 | Phosphatieren | Granodine[R] [4)] | 3,0 | 60-70 | 5 |
| 8 | Spülen | VE-Wasser [5)] | - | 20 | 1 |
| 9 | Trocknen | Druckluft | - | 20 | bis zur Trockene |

1) handelsgängiger stark alkalischer, phosphathaltiger Tauchreiniger der Fa. Collardin, Köln

2) unbehandeltes Stadtwasser mit 18 °d

3) handelsgängiges salzsäure- und inhibitorhaltiges Entrostungs- und Entzunderungsmittel der Fa. Collardin, Köln

4) handelsgängiges nitrat/nitrit-beschleunigtes Phosphatierungsmittel der Fa. Collardin, Köln

5) vollentsalztes (demineralisiertes) Wasser

Tabelle 2

Zusammensetzung und Leistungsparameter von Aktiviermitteln

| Bsp. | Komplexbildnersubstanz Typ | Menge (%) 1) | | $K_2TiF_6$ 2) (%) | $Na_2HPO_4$ (%) | Flächengewicht 3) | Kapazität 4) |
|---|---|---|---|---|---|---|---|
| Vgl.1 | kein Zusatz | - | | 3,8 | 73,4 | 2,2 | 1,7 |
| Vgl.2 | nachträglicher Zusatz | - | | 3,8 | 73,4 | 2,1 | 2,4 |
| 1 | 1-Hydroxyethan-1,1-diphosphonsäure | 0,38 | 0 | 3,8 | 73,0 | 2,6 | 4,0 |
| 2 | dto | 0,38 | 1,5 | 3,74 | 71,95 | 1,7 | 6,8 |
| 3 | dto | 0,38 | 0,75 | 3,75 | 72,3 | 2,2 | 4,4 |
| 4 | 1-Hydroxy-1-phenylmethan-1,1-diphosphonsäure ($Na_2$-Salz) | 0,38 | 1,5 | 3,7 | 71,95 | 2,0 | 5,2 |
| 5 | 1-Hydroxyhexan-1,1-diphosphonsäure | 0,38 | 1,5 | 3,74 | 71,95 | 1,9 | 6,4 |
| 6 | 1-Amino-1-phenylmethan-1,1-diphosphonsäure | 0,38 | 1,5 | 3,7 | 71,95 | 2,5 | 8,0 |

Fortsetzung

Fortsetzung Tabelle 2

| Bsp. | Komplexbildnersubstanz Typ | Menge (%)[1] | | $K_2TiF_6$[2] (%) | $Na_2HPO_4$ (%) | Flächengewicht[3] | Kapazität[4] |
|---|---|---|---|---|---|---|---|
| 7 | 1-p-Chlorphenylmethan-1,1-diphosphonsäure | 0,38 | 1,5 | 3,7 | 71,95 | 2,4 | 7,6 |
| 8 | 1-Hydroxyethan-1,1-diphosphonsäure (Produkt sprühgetrocknet) | 0,4 | 0,41 | 1,95 | 30,93 | 2,1 | 4,12 |
| 9 | Poly(aldehydocarbonsäure) (Na-Salz) POC OS 20 | 0,38 | 0,92 | 3,7 | 72,44 | 1,9 | 5,2 |

1) Erste Zahl: zu Beginn der Umsetzung zugegebene Menge (Gew.-%);
Zweite Zahl: zugegebene Menge nach dem Antrocknen des Reaktionsproduktes.

2) Ansatzverhältnis der Hauptkomponenten vor ihrer Reaktion. Die Differenz der genannten Mengen (Gew.-%) zu 100 % ist vollentsalztes Wasser.

3) Durchschnittliches Flächengewicht (in g/m²), bestimmt laut Angaben im Text.

4) Aktivierbare Fläche (in m²) pro 2 l Aktivierbad, enthaltend 0,2 Gew.-% des Aktiviermittels.

Tabelle 3

Prozeßablauf zur Abprüfung der Aktivierung in Verbindung mit einem "Niedrigzink"-Phosphatierverfahren GRANODINE[R] SP 2500/Spritzapplikation

| Stufe | Prozeß | Produkt | Konz. (Gew.-%) | Temp. (°C) | Behandlungszeit (min) |
|---|---|---|---|---|---|
| 1 | Vorreinigen | RIDOLINE[R] C 1250[1)] | 0,5 | 60 | 0,5 |
| 2 | Reinigen | RIDOLINE[R] C 1250[1)] | 0,5 | 55 | 2,0 |
| 3 | Spülen | Leitungswasser[2)] | - | 30 | 0,5 |
| 4 | Aktivieren | s. Tabelle 4 | 0,1 | 25 | 1,0 |
| 5 | Phosphatieren | GRANODINE[R] SP 2500[3)] | 4,2 | 52 | 1,5 |
| 6 | Spülen | Leitungswasser[2)] | - | 35 | 0,5 |
| 7 | Spülen | vollentsalztes Wasser | - | 20 | 0,5 |
| 8 | Trocknen | Warmluft | - | 75 | 10 |

1) mittelalkalischer phosphat/borathaltiger Spritz/Tauchreiniger der Fa. Collardin, Köln

2) Stadtwasser mit 28 °d

3) chlorat/nitritbeschleunigtes "Niedrigzink"-Phosphatierungsmittel der Fa. Collardin, Köln

Tabelle 4

Leistungsparameter von Aktiviermitteln in einem Niedrigzink-Phosphatierverfahren[1)]
Die Aktivierungswirkung des Standardproduktes wird als 100 % gesetzt.

| Beispiel | Produkt[2)] | in vollentsalztem Wasser | |
|---|---|---|---|
| | | Flächengewicht ($g/m^2$) | Aktivierungswirkung (%) |
| Vergleich | Standard | 3,66 | 100 |
| 10 | 1 | 1,64 | 223 |
| 11 | 5 | 2,19 | 167 |
| 12 | 4 | 2,33 | 157 |

1) Tabelle 3
2) Beispielnummer aus Tabelle 2

## Patentansprüche

1. Pulverförmige polymere Titan(IV)-phosphate,

(a) erhältlich durch Umsetzung von Titan(IV)-verbindungen mit Alkalimetallphosphaten sowie einem Titan(IV)-Komplexbildner in unterstöchiometrischer Menge, bezogen auf den Titan(IV)-Gehalt, in wäßriger Zubereitung bei Temperaturen im Bereich von 75 bis 120 °C und anschließendem Trocknen,
(b) wobei eine 0,2 Gew.-%ige wäßrige Dispersion der so erhaltenen Produkte bei Filtration durch ein Membranfilter der Porenweite 200 nm ein Filtrat ergibt, daß mehr als 95 Gew.-% der eingesetzten Titanmenge enthält.

**2.** Verfahren zur Herstellung von Titan(IV)-phosphaten nach Anspruch 1, dadurch gekennzeichnet, daß man eine Titan(IV)-verbindung mit einem Alkalimetallphosphat in wäßriger Zubereitung bei Temperaturen im Bereich von 75 bis 120 °C umsetzt, wobei man vor oder während der Umsetzung einen Titan-(IV)-Komplexbildner in unterstöchiometrischer Menge, bezogen auf den Titan(IV)-Gehalt, zugibt und anschließend das Reaktionsprodukt trocknet.

**3.** Verfahren nach Anspruch 2, dadurch gekennzeichnet, daß man als Titan(IV)-Verbindung Dikaliumhexafluorotitanat und als Alkalimetallphosphat Dinatriumhydrogenphosphat einsetzt, wobei das Atomverhältnis von Titan zu Phosphor 1 : 20 bis 1 : 60, vorzugsweise 1 : 25 bis 1 : 40, beträgt.

**4.** Verfahren nach Anspruch 2 oder 3, dadurch gekennzeichnet, daß man als Komplexbildner
(a) Poly(aldehydocarbonsäuren) oder deren Alkalimetallsalze, erhältlich durch die Umsetzung von Wasserstoffperoxid, Acrolein und Acrylsäure, mit
- einer Viskositätszahl im Bereich von 5 bis 50 ml/g,
- einer Säurezahl im Bereich von 450 bis 670,
- einem Säureäquivalentgewicht im Bereich von 125 bis 70,
- einem Stockpunkt von weniger als 0 °C und
- einem Gehalt an Carboxylgruppen im Bereich von 55 bis 90 Mol-% und
- einem Molekulargewicht im Bereich von 1 000 bis 20 000

und/oder
(b) 1,1-Diphosphonsäuren der allgemeinen Formel (IV)

$$\begin{array}{c} PO_3(M_1)_2 \\ | \\ X-C-R \\ | \\ PO_3(M_2)_2 \end{array} \qquad (IV)$$

wobei

| | |
|---|---|
| R | für einen unsubstituierten oder einen in Parastellung mit Halogen-, Amino-, Hydroxy- oder $C_{1-4}$-Alkylgruppen, vorzugsweise mit Cl oder $NH_2$, substituierten Phenylrest, einen geradkettigen oder verzweigtkettigen oder cyclischen, gesättigten oder einfach oder mehrfach ungesättigten Alkylrest mit 1 bis 10 C-Atomen, |
| X | für Wasserstoff, Hydroxy, Halogen oder Amino und |
| $M_1$ und $M_2$ | jeweils unabhängig voneinander für Wasserstoff und/oder das Äquivalent eines Alkalimetallions stehen, |

einsetzt.

**5.** Verfahren nach Anspruch 4, dadurch gekennzeichnet, daß man als Komplexbildner 1,1-Diphosphonsäuren der allgemeinen Formel (IV) einsetzt, wobei R für einen unverzweigten Alkylrest mit 1 bis 6 C-Atomen steht.

**6.** Verfahren nach Anspruch 4, dadurch gekennzeichnet, daß man als Alkalimetallsalz der Poly-(aldehydocarbonsäuren) und/oder 1,1-Diphosphonsäuren jeweils Natriumsalze einsetzt.

**7.** Verfahren nach einem oder mehreren der Ansprüche 2 bis 6, dadurch gekennzeichnet, daß man den Komplexbildner in einer Menge von 0,05 bis 0,7 Mol, vorzugsweise von 0,1 bis 0,6 Mol, pro Mol Titan-(IV) einsetzt.

8. Verfahren nach einem oder mehreren der Ansprüche 2 bis 7, dadurch gekennzeichnet, daß man bis zu 30 Gew.-% der Gesamtmenge an Komplexbildner vor oder während der Umsetzung von Titan(IV)-Verbindungen mit Alkalimetallphosphaten zugibt und die restliche Menge nach einem ersten Antrocknen auf eine Restfeuchte von 10 bis 20 % in die Reaktionsmischung einarbeitet.

9. Verfahren nach einem oder mehreren der Ansprüche 2 bis 8, dadurch gekennzeichnet, daß man die Umsetzung von Titan(IV)-Verbindungen mit Alkalimetallphosphaten bei Temperaturen im Bereich von 75 bis 120 °C, vorzugsweise im Bereich von 80 bis 100 °C, in einem Kneter bis zur Trockne oder in einem Rührkessel bei anschließender Sprühtrocknung durchführt.

10. Verfahren nach einem oder mehreren der Ansprüche 2 bis 9, dadurch gekennzeichnet, daß der Feststoffgehalt bei der Umsetzung im Bereich von 30 % bis 85 % liegt.

11. Verfahren nach Anspruch 10, dadurch gekennzeichnet, daß der Feststoffgehalt der Umsetzung in einem Kneter im Bereich von 75 % bis 85 % liegt.

12. Verfahren nach Anspruch 10, dadurch gekennzeichnet, daß der Feststoffgehalt bei der Umsetzung in einem Rührkessel im Bereich von 30 % bis 40 % liegt.

13. Verwendung von polymerem Titan(IV)-phosphat nach Anspruch 1 in Form von wäßrigen Dispersionen als Aktivierungsmittel von Metalloberflächen aus Eisen, Stahl, Zink, verzinktem Eisen oder verzinktem Stahl, Aluminium und/oder aluminiertem Stahl vor der Phosphatierung mit Zinkionen enthaltenden Phosphatierbädern, vorzugsweise vor der Niedrigzinkphosphatierung.

## Claims

1. Powder-form polymeric titanium (IV) phosphates
   (a) obtainable by reaction of titanium (IV) compounds with alkali metal phosphates and a titanium(IV) complexing agent in less than the stoichiometric quantity, based on the titanium(IV) content, in an aqueous preparation at temperatures in the range from 75 to 120 °C and subsequent drying,
   (b) a 0.2% by weight aqueous dispersion of the resulting products - on filtration through a membrane filter having a pore width of 200 nm - giving a filtrate containing more than 95% by weight of the quantity of titanium used.

2. A process for the production of the titanium(IV) phosphates claimed in claim 1, characterized in that a titanium(IV) compound is reacted with an alkali metal phosphate in an aqueous preparation at temperatures in the range from 75 to 120 °C, a titanium(IV) complexing agent being added in less than the stoichiometric quantity, based on the titanium(IV) content, before or during the reaction, and the reaction product is subsequently dried.

3. A process as claimed in claim 2, characterized in that dipotassium hexafluorotitanate is used as the titanium(IV) compound while disodium hydrogen phosphate is used as the alkali metal phosphate, the atomic ratio of titanium to phosphorus being from 1:20 to 1:60 and preferably from 1:25 to 1:40.

4. A process as claimed in claim 2 or 3, characterized in that the complexing agent used is selected from
   (a) poly(aldehydocarboxylic acids) or alkali metal salts thereof - obtainable by the reaction of hydrogen peroxide, acrolein and acrylic acid - with
   - a viscosity number of 5 to 50 ml/g,
   - an acid value of 450 to 670,
   - an acid equivalent weight of 125 to 70,
   - a pour point below 0 °C,
   - a carboxyl group content of 55 to 90 mol-% and
   - a molecular weight in the range from 1,000 to 20,000

   and/or

(b) 1,1-diphosphonic acids corresponding to general formula (IV)

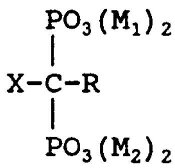

(IV)

in which

R is an unsubstituted phenyl radical or a phenyl radical substituted in the p-position by halogen, amino, hydroxy or $C_{1-4}$ alkyl groups, preferably by Cl or $NH_2$, a linear or branched or cyclic, saturated or mono- or polyunsaturated $C_{1-10}$ alkyl radical,

X is hydrogen, hydroxy, halogen or amino and

$M_1$ and $M_2$ independently of one another represent hydrogen and/or the equivalent of an alkali metal ion.

**5.** A process as claimed in claim 4, characterized in that 1,1-diphosphonic acids corresponding to general formula (IV), in which R is an unbranched $C_{1-6}$ alkyl radical, are used as the complexing agent.

**6.** A process as claimed in claim 4, characterized in that sodium salts are used as the alkali metal salts of the poly(aldehydocarboxylic acids) and/or 1,1-diphosphonic acids.

**7.** A process as claimed in one or more of claims 2 to 6, characterized in that the complexing agent is used in a quantity of 0.05 to 0.7 mol and preferably in a quantity of 0.1 to 0.6 mol per mol titanium(IV).

**8.** A process as claimed in one or more of claims 2 to 7, characterized in that up to 30% by weight of the total quantity of complexing agent is added before or during the reaction of titanium(IV) compounds with alkali metal phosphates and the remaining quantity is incorporated in the reaction mixture after initial drying to a residual moisture content of 10 to 20%.

**9.** A process as claimed in one or more of claims 2 to 8, characterized in that the reaction of titanium(IV) compounds with alkali metal phosphates is carried out at temperatures of 75 to 120 °C and preferably at temperatures of 80 to 100 °C in a kneader to dryness or in a stirred tank reactor with subsequent spray drying.

**10.** A process as claimed in one or more of claims 2 to 9, characterized in that the solids content during the reaction is in the range from 30 to 85%.

**11.** A process as claimed in claim 10, characterized in that the solids content during the reaction in a kneader is in the range from 75 to 85%.

**12.** A process as claimed in claim 10, characterized in that the solids content during the reaction in a stirred tank reactor is in the range from 30% to 40%.

**13.** The use of the polymeric titanium(IV) phosphate claimed in claim 1 in the form of aqueous dispersions as activators for metal surfaces of iron, steel, zinc, galvanized iron or galvanized steel, aluminium and/or aluminized steel before phosphating with phosphating baths containing zinc ions, preferably before low-zinc phosphating.

**Revendications**

**1.** Phosphates de titane(IV) polymères, en poudre,

(a) obtenables par mise en réaction de composés de titane(IV) avec des phosphates de métaux alcalins, ainsi qu'avec un agent complexant pour le titane(IV), en quantité hypostoechiométrique, par rapport à la teneur en titane(IV), en préparation aqueuse, à des températures comprises dans

l'intervalle de 75 à 120 °C, suivie de séchage.

(b) une dispersion aqueuse à 0,2 % en poids des produits ainsi obtenus donne, par filtration via un filtre à diaphragme de 200 nm de largeur de pore, un filtrat renfermant plus de 95 % en poids de la quantité de titane mise en oeuvre.

**2.** Procédé de fabrication de phosphates de titane(IV), selon la revendication 1, caractérisé en ce que l'on fait réagir un composé de titane(IV) avec un phosphate de métal alcalin, en préparation aqueuse, à des températures comprises dans l'intervalle de 75 à 120 °C, en ajoutant avant ou pendant la réaction un agent complexant pour le titane(IV) en quantité hypostoechiométrique, par rapport à la teneur en titane-(IV), et en séchant ensuite le produit réactionnel.

**3.** Procédé selon la revendication 2, caractérisé en ce que l'on met en oeuvre comme composé de titane-(IV), de l'hexafluotitanate dipotassique et comme phosphate de métal alcalin, de l'hydrogénophosphate disodique, le rapport atomique entre le titane et le phosphore étant compris entre 1:20 et 1:60, de préférence entre 1:25 et 1:40.

**4.** Procédé selon la revendication 2 ou 3, caractérisé en ce que l'on met en oeuvre comme agent complexant

(a) des acides poly(aldéhydocarboxyliques) ou leurs sels de métaux alcalins, obtenables par mise en réaction d'eau oxygénée, d'acroléine et d'acide acrylique, présentant

- un indice de viscosité compris dans l'intervalle de 5 à 50 ml/g,
- un indice d'acidité situé dans la plage s'étendant de 450 à 670,
- un poids équivalent d'acide compris dans l'intervalle de 125 à 70,
- un point de congélation inférieur à 0° C et
- une concentration en groupes carboxyle situé dans la plage allant de 55 à 90 moles % et
- un poids moléculaire compris dans l'intervalle de 1000 à 20 000

et/ou

(b) des acides 1,1-diphosphoniques de la formule générale (IV)

$$\begin{array}{c} PO_3(M_1)_2 \\ | \\ X-C-R \\ | \\ PO_3(M_2)_2 \end{array} \qquad (IV)$$

dans laquelle

R représente un radical phényle non substitué ou substitué en position para par des groupes halogène, amino, hydroxy ou alkyle en $C_1$ à $C_4$, de préférence par Cl ou $NH_2$, un radical alkyle à chaîne droite ou ramifiée, ou cyclique, saturé ou mono- ou polyinsaturé, comportant 1 à 10 atomes de C,

X correspond à l'hydrogène, à un groupe hydroxy, halogène ou amino et

$M_1$ et $M_2$ représentent chacun, indépendamment l'un de l'autre, l'hydrogène et/ou l'équivalent d'un ion de métal alcalin.

**5.** Procédé selon la revendication 4, caractérisé en ce que l'on met en oeuvre comme agent complexant, des acides 1,1-diphosphoniques de la formule générale (IV), dans laquelle R représente un radical alkyle non ramifié comportant 1 à 6 atomes de C.

**6.** Procédé selon la revendication 4, caractérisé en ce que l'on met en oeuvre comme sel de métal alcalin des acides (poly)aldéhydocarboxyliques et/ou 1,1-diphosphoniques, des sels de sodium.

**7.** Procédé selon l'une ou plusieurs des revendications 2 à 6, caractérisé en ce que l'on met en oeuvre l'agent complexant dans une proportion comprise entre 0,05 et 0,7 mole, de préférence entre 0,1 et 0,6 mole, par mole de titane(IV).

**8.** Procédé selon l'une ou plusieurs des revendications 2 à 7, caractérisé en ce que l'on ajoute jusqu'à 30 % en poids de la quantité totale d'agent complexant, avant ou pendant la réaction des composés de

titane(IV) avec les phosphates de métaux alcalins, et en ce que l'on incorpore la quantité restante dans le mélange réactionnel, après un premier séchage jusqu'à une humidité résiduelle de 10 à 20 %.

**9.** Procédé selon l'une ou plusieurs des revendications 2 à 8, caractérisé en ce que l'on réalise la réaction des composés de titane(IV) avec les phosphates de métaux alcalins, à des températures situées dans la plage allant de 75 à 120 °C, de préférence de 80 à 100 °C, dans un pétrisseur jusqu'à siccité ou dans un récipient à agitation avec séchage par pulvérisation subséquent.

**10.** Procédé selon l'une ou plusieurs des revendications 2 à 9, caractérisé en ce que la teneur en matières solides lors de la réaction est comprise dans l'intervalle de 30 à 85 %.

**11.** Procédé selon la revendication 10, caractérisé en ce que la teneur en matières solides lors de la réaction dans un pétrisseur se situe dans la plage allant de 75 à 85 %.

**12.** Procédé selon la revendication 10, caractérisé en ce que la teneur en matières solides lors de la réaction dans un récipient à agitation est comprise dans l'intervalle de 30 à 40 %.

**13.** Utilisation de phosphate de titane(IV) polymère selon la revendication 1, sous la forme de dispersions aqueuses, comme activant de surfaces métalliques en fer, acier, zinc, fer ou acier galvanisé, aluminium et/ou acier aluminé avant la phosphatation par des bains de phosphatation renfermant des ions de zinc, de préférence avant la phosphatation à faible teneur en zinc.